# EUROPEAN PATENT SPECIFICATION

(11) **EP 2 502 382 B1**
(45) Date of publication and mention of the grant of the patent: **27.09.2017**
(21) Application number: 09752842.6
(22) Date of filing: 18.11.2009
(51) Int. Cl.: H04L 12/14, H04L 29/06

(54) **METHOD AND APPARATUS FOR USE IN A COMMUNICATIONS NETWORK**
VERFAHREN UND VORRICHTUNG ZUR BENUTZUNG IN EINEM KOMMUNIKATIONSNETZWERK
PROCÉDÉ ET DISPOSITIF POUR L' UTILISATION DANS UN RÉSEAU DE COMMUNICATION

(43) Date of publication of application: 26.09.2012
(73) Proprietor: Telefonaktiebolaget LM Ericsson (publ), 164 83 Stockholm (SE)
(72) Inventor: CONTE, Giuseppe, Montréal Québec H2C 2S3 (CA); HARNESK, Magnus, S-187 68 Täby (SE); KHAN, David, S-168 71 Bromma (SE)
(74) Representative: Ericsson
(86) International application number: PCT/EP2009/065418
(87) International publication number: WO 2011/060815

(56) References cited:
- EP-A1- 2 076 004
- CAI Y ET AL: "IP MULTIMEDIA SUBSYSTEM ONLINE SESSION CHARGING CALL CONTROL" BELL LABS TECHNICAL JOURNAL, WILEY, CA, US, vol. 4, no. 10, 1 January 2006 (2006-01-01), pages 117-132, XP001239291 ISSN: 1089-7089
- KUHNE R ET AL: "A Mechanism for Charging System Self-Configuration in Next Generation Mobile Networks" NEXT GENERATION INTERNET NETWORKS, 3RD EURONGI CONFERENCE ON, IEEE, PI, 1 May 2007 (2007-05-01), pages 198-204, XP031176446 ISBN: 978-1-4244-0856-6

## Description

### Technical Field

The present invention relates to a method and apparatus for use in a communications network. More particularly, the invention relates to a method of operating an IP Multimedia Subsystem in order to collect session and event related information.

### Background

IP Multimedia services provide a dynamic combination of voice, video, messaging, data, etc. within the same session. By growing the number of basic applications and the media which it is possible to combine, the number of services offered to the end users will grow, and the inter-personal communication experience will be enriched. This will lead to a new generation of personalised, rich multimedia communication services, including so-called "combinational IP Multimedia" services.

The IP Multimedia Subsystem (IMS) is an access independent architectural framework for supporting traditional telephony as well as the new IP multimedia services (3GPP TS 22.228, TS 23.228, TS 24.229, TS 29.228, TS 29.229, TS 29.328 and TS 29.329). IMS provides key features to enrich the end-user person-to-person communication experience through the use of standardised IMS Service Enablers, which facilitate new rich person-to-person (client-to-client) communication services as well as person-to-content (client-to-server) services over IP-based networks. The IMS is able to connect to both PSTN/ISDN (Public Switched Telephone Network/Integrated Services Digital Network) as well as the Internet.

The IMS makes use of the Session Initiation Protocol (SIP) to set up and control calls or sessions between user terminals (or terminals and application servers). The Session Description Protocol (SDP), carried by SIP signalling, is used to describe and negotiate the media components of the session. Whilst SIP was created as a user-to-user protocol, IMS allows operators and service providers to control user access to services and to charge users accordingly. The 3GPP has chosen SIP for signalling between a User Equipment (UE) and the IMS as well as between the components within the IMS.

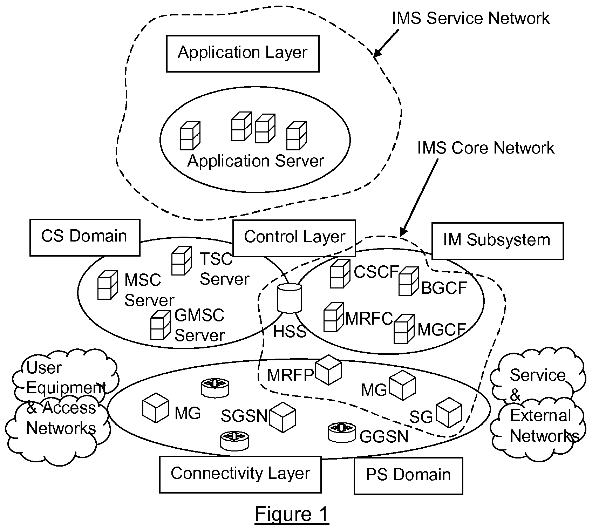

By way of example, Figure 1 illustrates schematically how the IMS fits into the mobile network architecture in the case of a GPRS/PS access network (IMS can of course operate over other access networks). Call/Session Control Functions (CSCFs) operate as SIP proxies within the IMS. The 3GPP architecture defines three types of CSCFs: the Proxy CSCF (P-CSCF) which is the first point of contact within the IMS for a SIP terminal; the Serving CSCF (S-CSCF) which provides services to the user that the user is subscribed to; and the Interrogating CSCF (I-CSCF) whose role is to identify the correct S-CSCF and to forward to that S-CSCF a request received from a SIP terminal via a P-CSCF.

Within the IMS service network, Application Servers (ASs) are provided for implementing IMS service functionality. Application Servers provide services to end users in an IMS system, and may be connected either as end-points over the 3GPP defined Mr interface, or "linked in" by an S-CSCF over the 3GPP defined ISC interface. In the latter case, Initial Filter Criteria (IFC) are used by an S-CSCF to determine which Applications Servers should be "linked in" during a SIP Session establishment (or indeed for the purpose of any SIP method, session or non-session related). The IFCs are received by the S-CSCF from a Home Subscriber Server (HSS) during the IMS registration procedure as part of a user's Subscriber Profile.

The Home Subscriber Server (HSS) is the main database in the IMS for storage of subscriber and service related data, including user identities, registration information, access parameters and the IFCs used to trigger services. The user identities consist of IP Multimedia Public Identities (IMPU) and IP Multimedia Private Identities (IMPI). The IMPU is the identity that other users can use in order to contact the user, whilst the IMPI is a user identity assigned by the user's network operator and that is used for registration and authorisation in the IMS. In order to participate in multimedia sessions, the user must register at least one IMPU with the network and an IMPI must be authenticated in the IMS at the application level. The private user identity and public user identities are stored in an IMS Services Identity Module (ISIM) application on a UMTS Integrated Circuit Card (UICC) at the user's terminal, and a particular IMPU may be simultaneously registered from multiple UEs that use different IMPIs and different contact addresses. The HSS also contains functionality of a Home Location Register and Authentication Centre (HLR/AUC) to provide support to packet-switched domain entities, such as the Serving GPRS Support Node (SGSN) and Gateway GPRS Support Node (GGSN), and to circuit switched domain entities, such as the Mobile Switching Centres (MSC).

3GPP TS 32.260 defines the Offline and Online Charging description for the IP Multimedia Subsystem. For both Offline and Online charging, charging information for network resource usage is collected concurrently with that resource usage. In Offline charging this charging information does not affect, in real-time, the service rendered. However, in Online charging, authorization for the network resource usage must be obtained by the network prior to the actual resource usage.

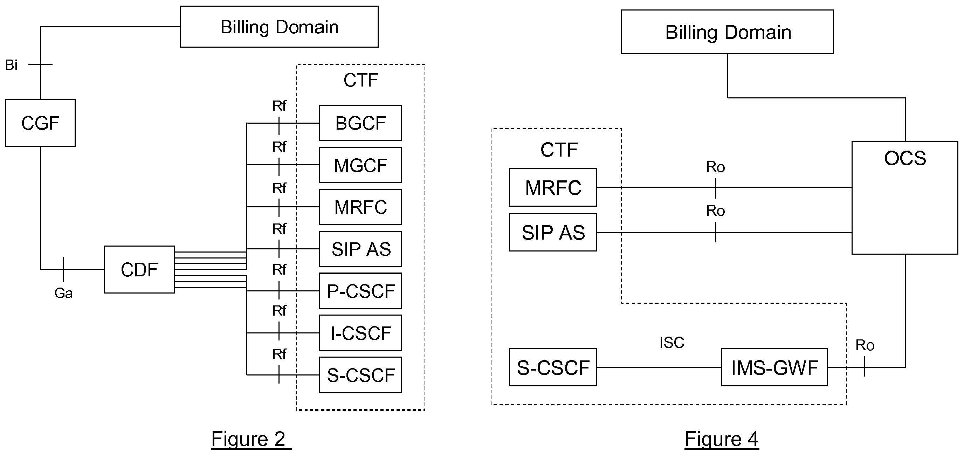

Figure 2 illustrates schematically the IMS offline charging architecture. In this architecture a Charging Trigger Function (CTF) generates charging events based on the observation of network resource usage. All IMS entities handling SIP signalling can be provided with CTF functionality. The CTF is the focal point for collecting the information pertaining to chargeable events within the network element, assembling this information into matching charging events, and sending these charging events towards the Charging Data Function (CDF). The Charging Data Function (CDF) receives charging events from the CTF via the Rf reference point. It then uses the information contained in the charging events to construct Charging Data Records (CDRs). The CDRs produced by the CDF are transferred to the Charging Gateway Function (CGF) via the Ga reference point. The CGF acts as a gateway between the 3GPP network and the Billing Domain (BD), and uses the Bx reference point for the transfer of CDR files to the BD. The BD typically comprises post-processing systems such as the operator's billing system or billing mediation device.

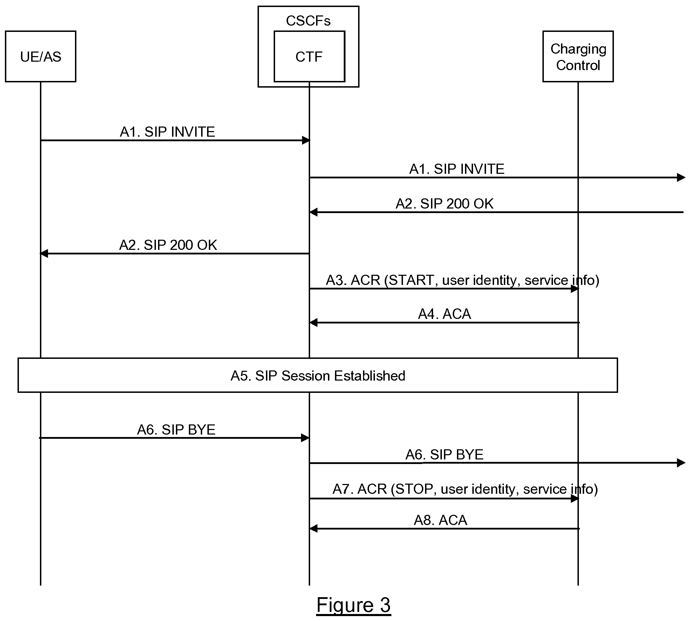

Figure 3 illustrates an example signalling flow diagram of a UE originated session establishment and termination, including the communication of the CTF with the offline charging functions as defined in 3GPP TS32.260. The steps performed are as follows:
- A1.: The UE initiates session establishment by sending a SIP INVITE message. The SIP INVITE message passes through the CSCFs (e.g. the I-CSCF, P-CSCF and S-CSCF) en-route to its destination.
- A2.: The recipient of the INVITE message answers and a final 200 OK response is returned to the UE. This response is also routed via the CSCFs.
- A3.: Upon receipt of the 200 OK response, a CTF provided by at least one of the CSCFs sends an Accounting Request (ACR) Diameter message towards the CDF, with the Accounting-Record-Type AVP indicating START, to record the start of a user session.
- A4.: The CDF acknowledges the reception of the ACR by sending an Accounting Answer (ACA) message. The CDF begins constructing a CDR. 3GPP TS32.299 defines the contents of the ACR and ACA messages.
- A5.: Upon receipt of the 200 OK response at the UE, the IMS session is established.
- A6.: This IMS session continues until the UE initiates termination of the session. The UE initiates session termination by sending a SIP BYE message. The SIP BYE message passes through the CSCFs en-route to the destination.
- A7.: Upon receipt of the SIP BYE message, the CTF provided by one of the CSCFs sends an ACR message towards the CDF, with the Accounting-Record-Type AVP indicating STOP, to record the end of a user session.
- A8.: The CDF acknowledges the reception of the ACR by sending an ACA message. The CDF ends construction of the CDR.

Figure 4 illustrates schematically the IMS online charging architecture. In this architecture, when receiving a network resource usage request, a CTF assembles the relevant charging information (which is not necessarily identical to the charging information employed in offline charging) and generates a charging event that is transferred to the Online Charging System (OCS) in real-time using the Ro reference point. The OCS then returns an appropriate resource usage authorization based on subscriber account information. This resource usage authorization may be limited in its scope (e.g. volume of data or duration), and may therefore have to be renewed from time to time as long as the subscriber's network resource usage persists. If required by the operator, CDRs may additionally be generated for online charged subscribers.

As illustrated in Figure 4, only an AS, an MRFC or an S-CSCF support online charging. However, with regards to the S-CSCF, the S-CSCF does not trigger any online charging events. A special CTF is therefore needed in order to mediate between the Ro based SBCF and the SIP based service control implemented by the S-CSCF. This role is taken by the IMS Gateway Function (IMS-GWF), which translates between SIP service control towards the S-CSCF and Ro credit control on the OCS side. From the perspective of the online charging architecture, the IMS-GWF is an online charging capable CTF; whilst from the perspective of the S-CSCF the IMS-GWF is a SIP application server and is triggered in the same way. As such, the S-CSCF supports online charging using either the ISC interface (i.e. if the application server addressed over the ISC interface is IMS-GWF), or the Ro interface directly (if the IMS-GWF is integrated within the S-CSCF).

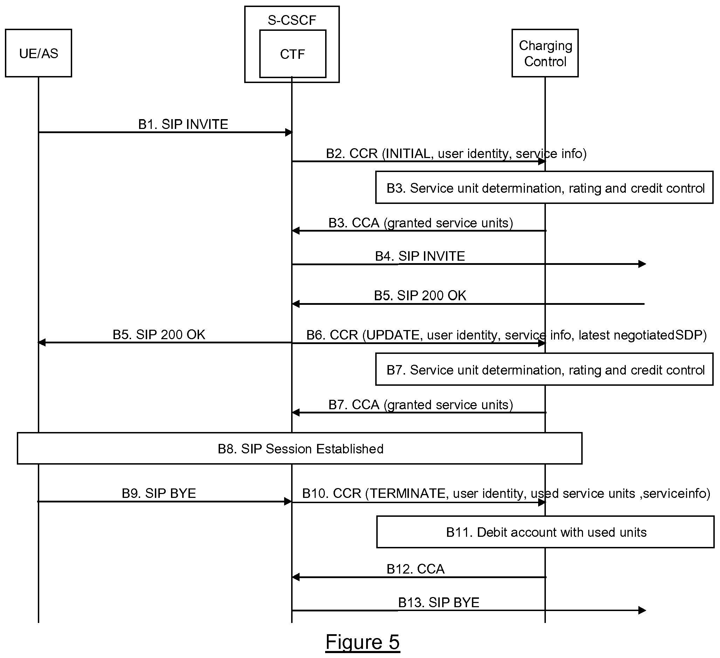

Figure 5 illustrates an example signalling flow diagram of a UE originated session establishment and termination, including the communication of a CTF with the online charging functions as defined in 3GPP TS32.260 for Session Charging with Unit Reservation (SCUR). The steps performed are as follows:
- B1.: The UE initiates session establishment by sending a SIP INVITE message. The SIP INVITE message passes through the CSCFs (i.e. the I-CSCF, P-CSCF and S-CSCF) en-route to its destination.
- B2.: Upon receipt of the SIP INVITE message, a CTF provided by the S-CSCF sends a Credit-Control-Request (CCR) Diameter message towards the OCS, with the CC-Request-Type AVP indicating INITIAL, requesting reservation of service units. The online credit control session is initiated.
- B3.: The OCS performs service unit determination, rating and credit control, and responds to the CCR with a Credit-Control-Answer message indicating the granted service units.
- B4.: The S-CSCF forwards the INVITE towards its destination.
- B5.: The recipient of the INVITE message answers and a final 200 OK response is returned to the UE. This response is also routed via the CSCFs.
- B6.: The receipt of the 200 OK response at the S-CSCF/CTF triggers a CCR message to the OCS, with CC-Request-Type AVP indicating UPDATE, requesting further reservation of service units and reporting any used service units.
- B7.: The OCS again performs service unit determination, rating and credit control, and responds to the CCR with a CCA message indicating the service units that have now been granted.
- B8.: Upon receipt of the 200 OK response at the UE, the IMS session is established.
- B9.: This IMS session continues until the UE initiates termination of the session. The UE initiates session termination by sending a SIP BYE message. The SIP BYE message passes through the CSCFs en-route to the destination.
- B10.: Upon receipt of the SIP BYE message, the S-CSCF/CTF sends a CCR message towards the OCS, with the CC-Request-Type AVP indicating TERMINATE, reporting the used granted units.
- B11.: The OCS debits the used units from the user's account and responds to the CCR with a CCA message. The online credit control session is terminated.

The CTF is required to determine whether any of the messages that pass through it contain indications of a chargeable activity and, if so, whether to apply online or offline charging mechanisms. The information relating to a chargeable activity is sent to the CDF in the Attribute Value Pairs of the Diameter accounting messages (i.e. ACR), and to the OCS in the Attribute Value Pairs of the Diameter credit control messages (i.e. CCR). This information may then be used by the charging architecture to generate CDRs that are passed to the network operator. Whilst the primary purpose of these CDRs is to allow the network operator to charge/bill user's accordingly and/or for inter-operator accounting, they can also be used for any additional functions at the operator's discretion. For example, CDRs may be used to generate statistics, or for security or traffic monitoring purposes. As such, the CTF may be required to provide any information to the charging architecture (i.e. the CDF/OCS) that can be derived from the messages passing through it, including information for which there are no defined AVPs in the Diameter messages (i.e. ACR, CCR etc).

Currently, in such circumstances, the only solution is to create new AVPs on the Rf and Ro interface, which are specific to the item of information required by the charging architecture. The creation of new Diameter AVPs for these applications is controlled by the 3rd Generation Partnership Project (3GPP), and network operators are therefore required to have each newly proposed AVPs agreed by the 3GPP. As such, the introduction of these new AVPs is not necessarily straightforward and can take a significant period of time to achieve. In addition, the introduction of these specific AVPs impacts on the encoding and decoding performed by the CTF and on the Diameter stack.

Cai et al. (2006) IP Multimedia Subsystem Online Session Charging Call Control, Bell Labs Technical Journal, Wiley, CA, US 10: 117-132 discloses a policy-based IMS call control system that converges the multiple application servers and the IMS gateway functionality into one IMS node for online session charging.

EP2076004 A1 discloses a method for online charging, especially in a mobile telecommunication network, comprising enabling the charging for a service or a product by a S-CSCF, which comprise a user profile, especially initial filter criteria, adapting the user profile, especially the initial filter criteria, according to a change of the tariff and a system for online charging, especially in a mobile telecommunication network, comprising: means for enabling the charging for a service or a product by a S-CSCF, which comprises an user profile, especially initial filter criteria, means for adapting the user profile, especially the initial filter criteria.

Kuhne et al. (2007) Mechanism for Charging System Self-Configuration in Next Generation Mobile Networks, Next Generation Internet Networks, 3rd EuroNGI Conference on, pp.198, 204 describes a mechanism for charging system self-configuration when new network or service elements that record charging information are added.

Ozianyi, V.G.; Ventura, N., (2009) Design and implementation of scalable IMS charging systems, Local Computer Networks, LCN 2009. IEEE 34th Conference on, pp.800,806 explores the design of a user friendly efficient charging, billing and accounting system for 3GPP based IMS networks.

### Summary

It is an object of the present invention to overcome, or at least mitigate the problems identified above. This object is achieved by configuring the IMS charging architecture to identify information using one or more string filters, and to then include the identified information in a generic information AVP for sending to the CDF/OCS.

According to a first aspect of the present invention there is provided a method of operating a Charging Trigger Function to collect session and/or event related information from an IP Multimedia Subsystem. The method comprises configuring the Charging Trigger Function with one or more string filters for identifying matching strings that are to be applied to messages passing through the Charging Trigger Function that relate to a subscriber, determining if messages that relate to the subscriber passing through the Charging Trigger Function include one or more matching strings, and, if a message does include one or more matching strings, sending a reporting message to a charging control entity, the reporting message comprising data associated with each matching string. The step of configuring a Charging Trigger Function with one or more string filters comprises, during registration of the subscriber with the IP Multimedia Subsystem, receiving a subscriber profile from a Home Subscriber Server, the subscriber profile defining the one or more string filters that are to be applied to messages passing through the Charging Trigger Function that relate to the subscriber.

Configuring the CTF with one or more string filters to identify any desired information, and then including the identified information in a generic information AVP provides that new specific AVPs do not have to be created for every new piece of charging-related information that it is desired to pass from the CTF to the CDF/OCS, and hence results in a cost savings. It also provides a flexible solution as any SIP header/Diameter AVP can be specified as charging or event-related information to be output to the OCS/CDR.

Each of the one or more string filters may comprise an indication of the type of message to which the primary regular expression should be applied. Each of the one or more string filters may comprise a primary regular expression for identifying a matching string. In addition, one or more of said string filters may further comprise a secondary regular expression for identifying a specific value or a specific range of values included as data associated with the matching string.

If a string filter comprises a primary regular expression and a secondary regular expression, then the step of determining if messages passing through the Charging Trigger Function include one or more matching strings may comprise determining if a message passing through the Charging Trigger Function includes one or more strings matching the primary regular expression, and, if so, determining if each of the matching strings is associated with data matching the secondary regular expression.

The reporting message may further comprise each matching string together with the data associated with that matching string. The reporting message may further comprise an indication of the type of message in which the matching string was identified. The reporting message may comprise a Diameter message in which the data associated with the one or more matching strings is included in a grouped Diameter Attribute Value Pair.

The data associated with each matching string may be included within an Attribute Value Pair within the grouped Attribute Value Pair.

Each of the one or more string filters may relate to one of a Session Initiation Protocol message, a Diameter message, and an ISDN User Part message.

A string filter relating to a Session Initiation Protocol message may comprise a header name. Furthermore, if a Session Initiation Protocol message passing through the Charging Trigger Function is identified as including one or more matching strings, then the data associated with each matching string may comprise a value included within the matching header.

A string filter relating to a Diameter message may comprise one of an Attribute Value Pair Code and Vendor-ID of an Attribute Value Pair, and an Attribute Name of an Attribute Value Pair. Furthermore, if a Diameter message passing through the Charging Trigger Function is identified as including one or more matching strings, then the data associated with the matching string may comprise a value included within the matching Attribute Value Pair.

The Charging Trigger Function may be provided in one or more of a Breakout Gateway Control Function, a Media Gateway Control Function, a Multimedia Resource Function Controller, an Application Server, and a Call Session Control Function. The charging control entity may be one of an Online Charging System, and a Charging Data Function.

According to a second aspect of the present invention there is provided a method of operating a system, the system comprising a Home Subscriber Server within an IP Multimedia Subsystem and a Charging Trigger Function. The method comprises configuring the Home Subscriber Server with a subscriber's profile, the profile defining one or more string filters that are to be applied to messages passing through the Charging Trigger Function that relate to the subscriber, and during registration of a subscriber with the IP Multimedia Subsystem, sending the profile relating to the subscriber from the home Subscriber Server to the Charging Trigger Function, receiving the subscriber profile at the Charging Trigger Function and configuring the Charging Trigger Function with said one or more string filters for identifying matching strings that are to be applied to messages passing through the Charging Trigger Function that relate to the subscriber; determining if messages that relate to the subscriber passing through the Charging Trigger Function include one or more matching strings; if a message does include one or more matching strings, sending a reporting message to a charging control entity, the reporting message comprising data associated with each matching string.

According to a third aspect of the present invention there is provided an apparatus configured to operate as a Charging Trigger Function. The apparatus comprises a receiver for receiving a subscriber profile from a Home Subscriber Server, the subscriber profile comprising one or more string filters to be applied to messages relating to the subscriber, a memory for storing the one or more string filters for identifying matching strings, a matching unit for determining if messages relating to the subscriber passing through the Charging Trigger Function include one or more matching strings, a message generation unit for generating a reporting message, the reporting message comprising data associated with each matching string, and a transmitter for sending the reporting message to a charging control entity.

According to a fourth aspect of the present invention there is provided a system, the system comprising a Charging Trigger Function according to the third aspect of the invention and an apparatus configured to operate as a Home Subscriber Server. The apparatus comprises a memory for storing subscriber profiles comprising one or more string filters to be applied to messages relating to the subscriber, a receiver for receiving a request for a subscriber's profile, and a transmitter for sending the subscriber profile including the one or more string filters to a Charging Trigger Function.

### Brief Description of the Drawings

Figure 1 illustrates schematically the mobile network architecture of a GPRS/PS access network;
Figure 2 illustrates schematically the offline charging architecture of the I P Multimedia Subsystem;
Figure 3 illustrates an example signalling flow diagram of a UE originated session establishment and termination;
Figure 4 illustrates schematically the online charging architecture of the IP Multimedia Subsystem;
Figure 5 illustrates an example signalling flow diagram of a UE originated session establishment and termination;
Figure 6 illustrates an example signalling flow diagram of a UE originated session establishment and termination according to an embodiment of the present invention;
Figure 7 illustrates an example signalling flow diagram of a UE originated session establishment and termination according to an embodiment of the present invention;
Figure 8 illustrates an example signalling flow diagram of a UE originated session establishment and termination according to an embodiment of the present invention;
Figure 9 illustrates an example signalling flow diagram of a UE originated session establishment and termination according to an embodiment of the present invention;
Figure 10 illustrates schematically an example of a Charging Trigger Function according to an embodiment of the present invention; and
Figure 11 illustrates schematically an example of a Home Subscriber Server according to an embodiment of the present invention.

### Detailed Description

There will now be described a method by which a CTF can be used to obtain any information that can be derived from the messages passing through the node providing the CTF function, without the need to create new specific AVPs for each new item of information required. The method involves configuring the IMS charging architecture to identify information using one or more string filters, and to then include the identified information in a generic information AVP for sending to the CDF/OCS. According to the method, the generic information AVP is configured to carry any information for use by the network operator, as opposed to those AVPs defined to carry a specific item of information. The information obtained from the messages passing through the CTF can relate to an IMS session or can equally relate to an event, such as registration of a user within the IMS. The CDF/OCS can then create new corresponding fields in CDRs in order to pass this information to the Billing Domain over the Bi interface.

The information to be identified by the IMS charging architecture can be configured on a per user basis. This is achieved by configuring the information in the subscriber's profile in the HSS and providing this information to the CTF during registration of the subscriber with the IMS. Configuring this information on a per user basis provides that the IMS charging architecture can output user specific data during an IMS session.

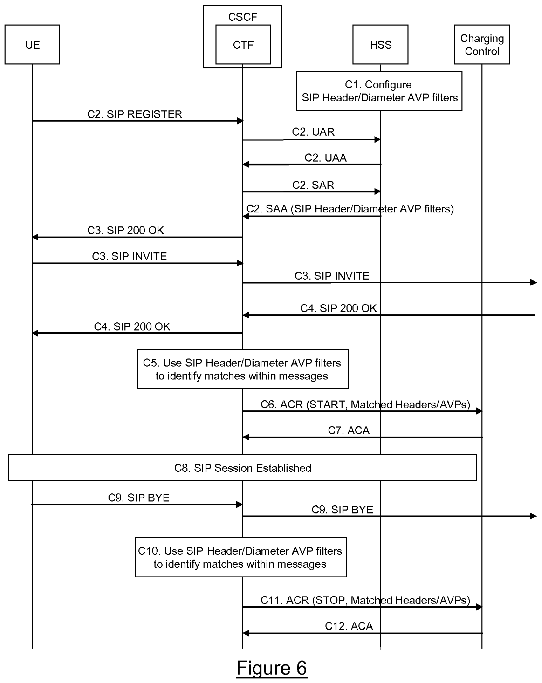

Figure 6 illustrates an example signalling flow diagram of a UE originated session establishment and termination. This signalling flow includes the communication of a CTF, implemented within a CSCF, with the offline charging functions, wherein the string filters are configured on a per user basis. The steps performed are as follows:
- C1.: The HSS is configured with the subscriber's profile. The configured profile defines one or more string filters.
- C2.: During IMS registration, the user profile information is sent by the HSS to the CTF in a Server Assignment Answer (SAA) message. This includes the string filters defined in the profile.
- C3.: Following registration of the subscriber with the IMS, the subscriber's UE initiates session establishment by sending a SIP INVITE message that passes through the CSCFs en-route to its destination.
- C4.: The recipient of the INVITE message answers and a final 200 OK response is returned to the UE that is also routed via the CSCFs.
- C5.: The CTF function provided at a CSCF applies the string filters defined in the subscriber's profile to the messages that pass through/traverse the CSCFs, in order to identify any SIP Headers or Diameter AVPs that match these strings. The CTF records any SIP Headers or Diameter AVPs that match any of these strings, together with any values associated within any of these matched SIP Headers or Diameter AVPs.
- C6.: The CTF sends an ACR message towards the CDF. The ACR message includes the generic information AVP. The generic information AVP identifies the matched SIP Headers or Diameter AVPs and includes the values associated with the matched SIP Headers or Diameter AVPs. The ACR message has the Accounting-Record-Type AVP indicating START, to record the start of a user session.
- C7.: The CDF acknowledges the reception of the ACR by sending an ACA message. The CDF begins constructing a CDR.
- C8.: Upon receipt of the 200 OK response at the UE, the IMS session is established.
- C9.: This IMS session continues until the UE initiates termination of the session. The UE initiates session termination by sending a SIP BYE message. The SIP BYE message passes through the CSCFs en-route to the destination.
- C10.: The CTF continues to apply the string filters defined in the subscriber's profile to the messages that pass through/traverse the S-CSCF, and records any SIP Headers or Diameter AVPs that match any of these strings, together with any values associated within any of these matched SIP Headers or Diameter AVPs.
- C11.: The CTF sends an ACR message towards the CDF. The ACR message includes the generic information AVP. The generic information AVP identifies the matched SIP Headers or Diameter AVPs and includes the values associated with the matched SIP Headers or Diameter AVPs. The ACR message has the Accounting-Record-Type AVP indicating STOP to record the end of a user session.
- C12.: The CDF acknowledges the reception of the ACR by sending an ACA message. The CDF closes construction of the CDR.

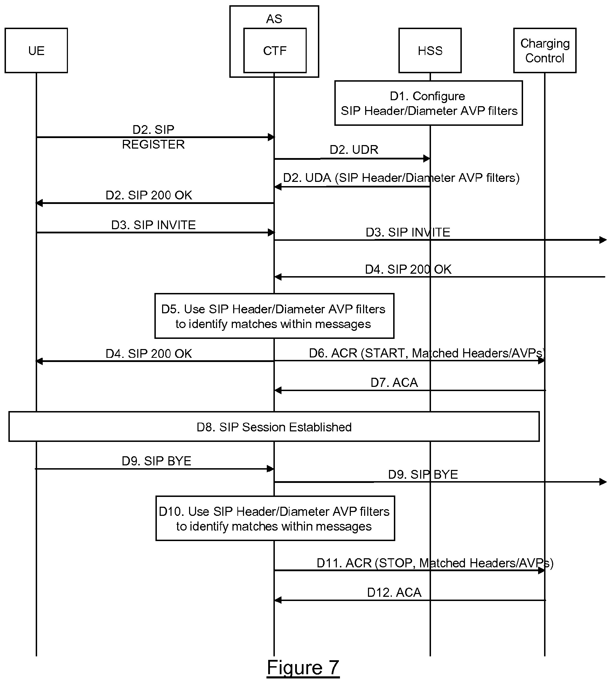

Figure 7 illustrates an example signalling flow diagram of a UE originated session establishment and termination. This signalling flow includes the communication of a CTF, implemented within an AS, with the offline charging functions, wherein the string filters are configured on a per user basis. The steps performed are as follows:
- D1.: The HSS is configured with the subscriber's profile. The configured profile defines one or more string filters.
- D2.: During IMS registration, the user profile information is sent by the HSS to the AS/CTF in a User Data Answer (UDA) message. This includes the string filters defined in the profile.
- D3.: Following registration of the subscriber with the IMS, the subscriber's UE initiates session establishment by sending a SIP INVITE message that passes through the AS en-route to its destination.
- D4.: The recipient of the INVITE message answers and a final 200 OK response is returned to the UE that is also routed via the AS.
- D5.: The CTF function provided by the AS applies the string filters defined in the subscriber's profile to the messages that pass through/traverse the AS, in order to identify any SIP Headers or Diameter AVPs that match these strings. The CTF records any SIP Headers or Diameter AVPs that match any of these strings, together with any values associated within any of these matched SIP Headers or Diameter AVPs.
- D6.: The CTF sends an ACR message towards the CDF. The ACR message includes the generic information AVP. The generic information AVP identifies the matched SIP Headers or Diameter AVPs and includes the values associated with the matched SIP Headers or Diameter AVPs. The ACR message has the Accounting-Record-Type AVP indicating START, to record the start of a user session.
- D7.: The CDF acknowledges the reception of the ACR by sending an ACA message. The CDF begins constructing a CDR.
- D8.: Upon receipt of the 200 OK response at the UE, the IMS session is established.
- D9.: This IMS session continues until the UE initiates termination of the session. The UE initiates session termination by sending a SIP BYE message. The SIP BYE message passes through the AS en-route to the destination.
- D10.: The CTF continues to apply the string filters defined in the subscriber's profile to the messages that pass through/traverse the AS, and records any SIP Headers or Diameter AVPs that match any of these strings, together with any values associated within any of these matched SIP Headers or Diameter AVPs.
- D11.: The CTF sends an ACR message towards the CDF. The ACR message includes the generic information AVP. The generic information AVP identifies the matched SIP Headers or Diameter AVPs and includes the values associated with the matched SIP Headers or Diameter AVPs. The ACR message has the Accounting-Record-Type AVP indicating STOP to record the end of a user session.
- D12.: The CDF acknowledges the reception of the ACR by sending an ACA message. The CDF closes construction of the CDR.

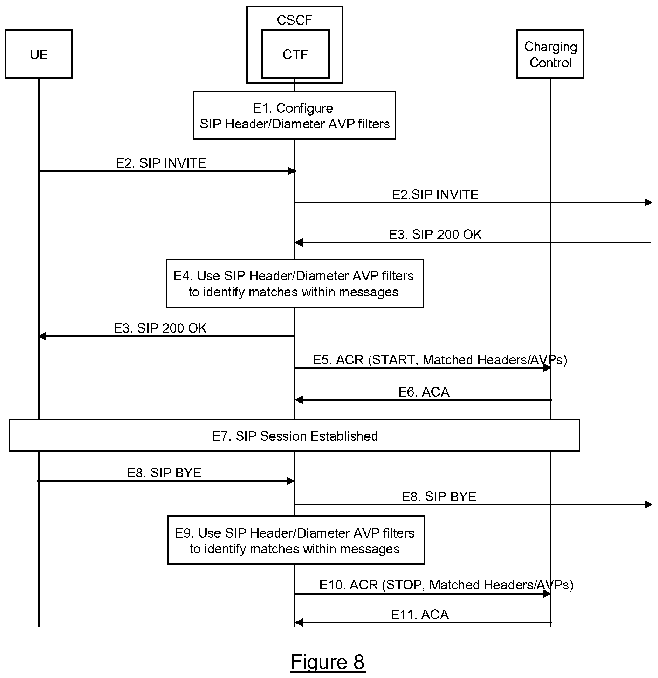

Alternatively, the information to be identified by the IMS charging architecture can be configured on a per node basis, by configuring the information directly into the CTF. Figure 8 illustrates an example signalling flow diagram of a UE originated session establishment and termination. This signalling flow includes the communication of a CTF, implemented within a CSCF, with the offline charging functions, wherein the string filters are configured on a per node basis, in the CSCF. The steps performed are as follows:
- E1.: The CTF provided at a CSCF is configured with one or more string filters that are to be applied to any SIP and/or Diameter messages that traverse the CSCF/CTF.
- E2.: Subsequently, the UE initiates session establishment by sending a SIP INVITE message that passes through the CSCFs en-route to its destination.
- E3.: The recipient of the INVITE message answers and a final 200 OK response is returned to the UE that is also routed via the CSCFs.
- E4.: The CTF provided by the CSCFs applies the pre-configured string filters to the messages that pass through it, in order to identify any SIP Headers or Diameter AVPs that match these strings. The CTF records any SIP Headers or Diameter AVPs that match any of these strings, together with any values associated within any of these matched SIP Headers or Diameter AVPs.
- E5.: The CTF sends an ACR message towards the CDF. The ACR message includes the generic information AVP. The generic information AVP identifies the matched SIP Headers or Diameter AVPs and includes the values associated with the matched SIP Headers or Diameter AVPs. The ACR message has the Accounting-Record-Type AVP indicating START, to record the start of a user session.
- E6.: The CDF acknowledges the reception of the ACR by sending an ACA message. The CDF begins constructing a CDR.
- E7.: Upon receipt of the 200 OK response at the UE, the IMS session is established.
- E8.: This IMS session continues until the UE initiates termination of the session. The UE initiates session termination by sending a SIP BYE message. The SIP BYE message passes through the CSCFs en-route to the destination.
- E9.: The CTF continues to apply the pre-configured string filters to the messages that pass through/traverse the CSCFs, and records any SIP Headers or Diameter AVPs that match any of these strings, together with any values associated within any of these matched SIP Headers or Diameter AVPs.
- E10.: The CTF sends an ACR message towards the CDF. The ACR message includes the generic information AVP. The generic information AVP identifies the matched SIP Headers or Diameter AVPs and includes the values associated with the matched SIP Headers or Diameter AVPs. The ACR message has the Accounting-Record-Type AVP indicating STOP to record the end of a user session.
- E11.: The CDF acknowledges the reception of the ACR by sending an ACA message. The CDF closes construction of the CDR.

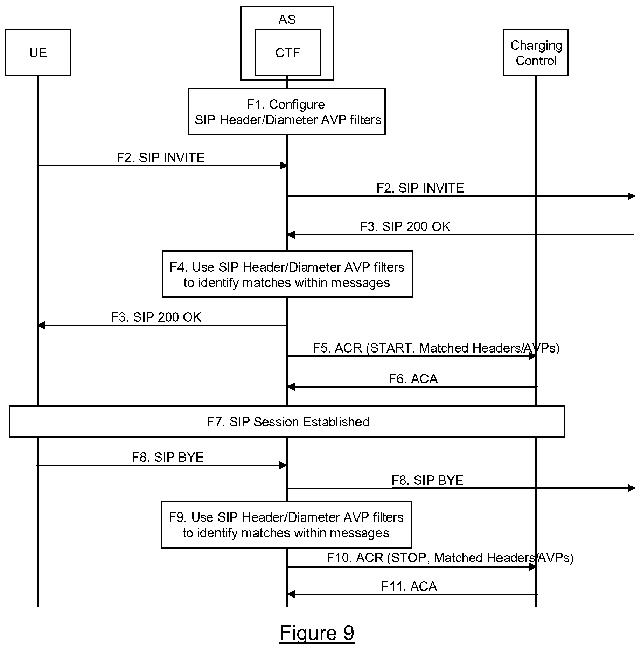

Figure 9 illustrates an example signalling flow diagram of a UE originated session establishment and termination. This signalling flow includes the communication of a CTF, implemented within an AS, with the offline charging functions, wherein the string filters are configured on a per node basis, in the CSCF. The steps performed are as follows:
- F1.: The AS is configured with one or more string filters that are to be applied to any SIP and/or Diameter messages that traverse the AS/CTF.
- F2.: Subsequently, the UE initiates session establishment by sending a SIP INVITE message that passes through the AS en-route to its destination.
- F3.: The recipient of the INVITE message answers and a final 200 OK response is returned to the UE that is also routed via the AS.
- F4.: The CTF provided by the AS applies the pre-configured string filters to the messages that pass through it, in order to identify any SIP Headers or Diameter AVPs that match these strings. The CTF records any SIP Headers or Diameter AVPs that match any of these strings, together with any values associated within any of these matched SIP Headers or Diameter AVPs.
- F5.: The CTF sends an ACR message towards the CDF. The ACR message includes the generic information AVP. The generic information AVP identifies the matched SIP Headers or Diameter AVPs and includes the values associated with the matched SIP Headers or Diameter AVPs. The ACR message has the Accounting-Record-Type AVP indicating START, to record the start of a user session.
- F6.: The CDF acknowledges the reception of the ACR by sending an ACA message. The CDF begins constructing a CDR.
- F7.: Upon receipt of the 200 OK response at the UE, the IMS session is established.
- F8.: This IMS session continues until the UE initiates termination of the session. The UE initiates session termination by sending a SIP BYE message. The SIP BYE message passes through the AS en-route to the destination.
- F9.: The CTF continues to apply the pre-configured string filters to the messages that pass through/traverse the AS, and records any SIP Headers or Diameter AVPs that match any of these strings, together with any values associated within any of these matched SIP Headers or Diameter AVPs. F10. The CTF sends an ACR message towards the CDF. The ACR message includes the generic information AVP. The value of the generic information AVP identifies the matched SIP Headers or Diameter AVPs and includes the values associated with the matched SIP Headers or Diameter AVPs. The ACR message has the Accounting-Record-Type AVP indicating STOP to record the end of a user session.
- F11.: The CDF acknowledges the reception of the ACR by sending an ACA message. The CDF closes construction of the CDR.

In order to implement these methods both the Rf interface between the CTF and the CDF, and Ro interface between the CTF and the OCS will require extension to include a new generic information AVP. As noted above, the generic information AVP would be used to carry the information obtained from the messages that pass through CTF. Defining a generic information AVP avoids the need to create new specific AVPs for every new piece of information required from the CTF by the CDF/OCS.

In addition, if the information required by the CDF/OCS is defined on a per user basis in the HSS, then the interface between the HSS and the CTF will also require extension in order to allow the HSS to send the string filters that should be used to identify the required information. For example, the Cx interface between the HSS and CSCFs, and the Sh interface between the HSS and the AS, may require extension to include a new requested information AVP. The requested information AVP would take the form of a Grouped type AVP that is comprised of a sequence of AVPs, and enables this AVP to include multiple string filters. Grouped type AVPs are defined in IETF RFC 3588. This requested information AVP would then be included within Diameter messages carrying the subscriber profile information sent from the HSS. For example, the requested information AVP could take the form:

```
 *Requested-Transaction-Info ::=
   *{Requested-Transaction-Type = <transaction type>}
   *[Requested-Transaction-Data-Entry = <header, CC/VendorlD/AVP
   name/code>]
   *[Requested-Transaction-Data-Value = <value>]
```

where < > denotes a mandatory and position dependent field, { } denotes a mandatory field, [ ] denotes an optional field, and * denotes a field that can have multiple instances.

Requested-Transaction-Info is the name of the grouped requested information AVP. The Requested-Transaction-Type AVP within the grouped AVP indicates which type of message the filter should apply to (i.e. a SIP Request, Diameter Response etc). The Requested-Transaction-Type AVP would be of the Enumerated format and its definition contains a list of valid values (i.e. 0 = SIP Request). Requested-Transaction-Data-Entry AVP includes the string filter that should be matched for a message. For example, the Requested-Transaction-Data-Entry AVP could include a SIP header field name, a Diameter message command code together with an AVP name, or a Diameter message command code together with AVP code and, if required, the Vendor ID.

The Requested-Transaction-Data-Value AVP is an optional AVP that can include an additional string filter associated with Requested-Transaction-Data-Entry AVP. If present, the Requested-Transaction-Data-Value AVP contains a string defining specific values of interest within a SIP header or Diameter AVP. A regular expression (regexp) evaluation may be performed on the string defined in the Requested-Transaction-Data-Value AVP such that only those parts of the SIP Header/Diameter AVP content that match the string will be the recorded and output in the generic information AVP. If the Requested-Transaction-Data-Value AVP is not present, the entire value associated with the SIP header or Diameter AVP will be recorded and output in the generic information AVP.

If a diameter message sent from the HSS to the CTF is to define more than string filter, then multiple instances of the Requested-Transaction-Data-Entry AVP (and possibly the Requested-Transaction-Data-Value AVP) would be included in the Requested-Transaction-Info AVP. When defining a string filter for identifying a particular SIP header it is sufficient to simply use the SIP header field name as the string filter. However, when defining a string filter for a Diameter AVP it is necessary to include either the Diameter message command code together with the AVP name, or the Diameter message command code together with AVP code and, if required, the Vendor ID.

The generic information AVP would also take the form of a Grouped type AVP that is comprised of a sequence of AVPs, and enables this AVP to carry data relating to multiple matching strings. This generic information AVP would then be included within Diameter messages sent to the charging control nodes (i.e. CDF/OCS) for carrying the information obtained from the messages that pass through CTF. For example, the generic information AVP could take the form:

```
 *Transaction-Info ::=
   {Transaction-Type} Enumerated: 0=SIP Request, 1=SIP Response,
     2=Diameter Request, 3=Diameter Response
   *{Transaction-Data-Name}
   *{Transaction-Data-Value}
```

Transaction-Info is the name of the grouped generic information AVP. The Transaction-Type AVP within the grouped AVP indicates which type of message has been identified by a string filter (i.e. a SIP Request, Diameter Response etc). The Transaction-Type AVP would be of the Enumerated format and its definition contains a list of valid values (i.e. 0 = SIP Request). The Transaction-Data-Name AVP indicates the string matched using the string filter, such as the SIP Header or Attribute Name. The Transaction-Data-Value AVP indicates the value associated with the matched string. For example, the Transaction-Data-Value AVP would include the value associated with a SIP Header or the value of an AVP.

When a message is identified as containing more than one match for a string filter, then multiple instances of the Transaction-Data-Name AVP and Transaction-Data-Value AVP would be included in the Transaction-Info AVP to convey the information relating to each matching string. In addition, multiple instances of the Transaction-Data-Name AVP and Transaction-Data-Value AVP would also be included in the Transaction-Info AVP when a message contains strings which match multiple different string filters.

For example, if the CTF is configured with a string filter for obtaining the information contained within the Contact header of a SIP Request then, assuming a SIP Request passing through the CTF contained two Contact headers, the Transaction-Info AVP could take the form:

```
 Transaction-Info ::=
   Transaction-Type= 0
   Transaction-Data-Name= Contact
   Transaction-Data-Value= sip@ericsson.com
   Transaction-Data-Name= Contact
   Transaction-Data-Value= sip2@ericsson.com
```

In another example, if the CTF is configured with a string filter for obtaining the information contained within the User-Agent header of a SIP Response, then the Transaction-Info AVP could take the form:

```
 Transaction-Info ::=
   Transaction-Type= 1
   Transaction-Data-Name= user-agent
   Transaction-Data-Value= sipclient
```

In a further example, if the CTF is configured with a string filter for obtaining the information contained within the SIP-Server-URI AVP of a Diameter Location Info Answer (LIA) request then, the Transaction-Info AVP could take the form:

```
 Transaction-Info ::=
   Transaction-Type= 2
   Transaction-Data-Name= 285 SIP-Server-URI
   Transaction-Data-Value= sip@ericsson.com
```

where 285 is the Diameter LIA message command code

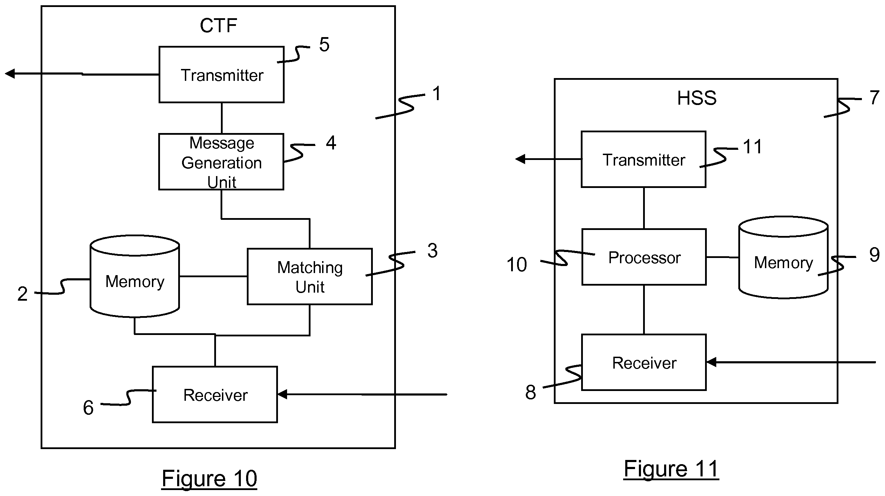

Figure 10 illustrates schematically an example of a CTF 1 suitable for implementing the method described above. The CTF 1 can be implemented as a combination of computer hardware and software. The CTF 1 comprises a database or memory 2, a matching unit 3, a message generation unit 4, a transmitter 5 and a receiver 6. The memory 2 is used to store the string filters. The matching unit 3 determines if messages passing through the CTF 1 include any strings that match the string filters stored in the memory 2. If any matching strings are identified, then the message generation unit 4 generates a Diameter message including any data associated with each of the identified matching strings. This Diameter message is then sent to either the CDF or the OCS by the transmitter 5, to report the matching strings and the data associated with those strings. The receiver 6 can be used to receive a subscriber's profile information from a HSS, when the CTF is to be configured with string filters on a per user basis.

Figure 11 illustrates schematically an example of a HSS 7 suitable for implementing the method described above. The HSS 7 can be implemented as a combination of computer hardware and software. The HSS 7 comprises a receiver 8, a database or memory 9, a processor 10 and a transmitter 11. The memory 9 is used to store subscriber profiles, including the string filters that are to be applied, by the CTF, to messages that relate to that subscriber. The HSS 7 receives a request for subscriber profile information on receiver 8. The processor 10 uses the information in the request to identify and retrieve the subscriber's profile from the memory 9. The subscriber's profile, including the string filters, is then sent to the CTF by the transmitter 11.

The methods and apparatus described above enable the CTF to provide any information to the charging architecture (i.e. the CDF/OCS) that can be derived from the messages passing through it. The information that can be provided to the charging architecture when implementing the methods described above can, if required, enable network operators to form a complete picture of subscriber usage of IMS. For example, the network operator can use this information to determine how many licenses have been used, which is particularly useful if they are required to pay an additional fee for a license.

Defining a generic information AVP for carrying this information provides that new specific AVPs do not have to be created for every new piece of charging-related information that it is desired to pass from the CTF and the CDF/OCS, and hence results in a cost savings. It also provides a flexible solution as any SIP header/Diameter AVP can be specified as charging-related information to be output to the OCS/CDR.

It will be appreciated by the person of skill in the art that various modifications may be made to the above-described embodiments without departing from the scope of the present invention. For example, the method described above could be equally applied to capture information from ISDN User Part (ISUP) messages passing through the node providing the CTF functionality.

## Claims

1. A method of operating a Charging Trigger Function to collect session and/or event related information from an IP Multimedia Subsystem, the method comprising:
configuring the Charging Trigger Function with one or more string filters for identifying matching strings that are to be applied to messages passing through the Charging Trigger Function that relate to a subscriber;
determining if messages that relate to the subscriber passing through the Charging Trigger Function include one or more matching strings (C5, D5);
the method being **characterized by**
if a message does include one or more matching strings, sending a reporting message to a charging control entity, the reporting message comprising data associated with each matching string (C6, D6); and
wherein the step of configuring a Charging Trigger Function with one or more string filters comprises, during registration of the subscriber with the IP Multimedia Subsystem, receiving a subscriber profile from a Home Subscriber Server, the subscriber profile defining the one or more string filters that are to be applied to messages passing through the Charging Trigger Function that relate to the subscriber (C2, D2).

2. The method as claimed in claim 1, wherein each of the one or more string filters comprises a primary regular expression for identifying a matching string.

3. The method as claimed in claim 2, wherein one or more of said string filters further comprises a secondary regular expression for identifying a specific value or a specific range of values included as data associated with the matching string.

4. The method as claimed in claim 3, wherein, if a string filter comprises a primary regular expression and a secondary regular expression, the step of determining if messages passing through the Charging Trigger Function include one or more matching strings comprises:
determining if a message passing through the Charging Trigger Function includes one or more strings matching the primary regular expression; and
if so, determining if each of the matching strings is associated with data matching the secondary regular expression.

5. The method as claimed in any of claims 2 to 4, wherein each of the one or more string filters further comprises an indication of the type of message to which the primary regular expression should be applied.

6. The method as claimed in any preceding claim, wherein the reporting message further comprises each matching string together with the data associated with that matching string.

7. The method as claimed in any preceding claim, wherein the reporting message further comprises an indication of the type of message in which the matching string was identified.

8. The method as claimed in any preceding claim, wherein each of the one or more string filters relates to one of:
a Session Initiation Protocol message;
a Diameter message; and
an ISDN User Part message.

9. A method as claimed in claim 8, wherein a string filter relating to a Session Initiation Protocol message comprises a header name.

10. A method as claimed in claim 9, wherein if a Session Initiation Protocol message passing through the Charging Trigger Function is identified as including one or more matching strings, then the data associated with each matching string comprises a value included within the matching header.

11. A method as claimed in claim 8, wherein a string filter relating to a Diameter message comprises one of:
an Attribute Value Pair Code and Vendor-ID of an Attribute Value Pair; or
an Attribute Name of an Attribute Value Pair.

12. A method as claimed in claim 11, wherein if a Diameter message passing through the Charging Trigger Function is identified as including one or more matching strings, then the data associated with the matching string comprises a value included within the matching Attribute Value Pair.

13. A method of operating a system, the system comprising a Home Subscriber Server within an IP Multimedia Subsystem and a Charging Trigger Function, the method comprising:
configuring the Home Subscriber Server with a subscriber's profile, the profile defining one or more string filters (C1, D1) that are to be applied to messages passing through the Charging Trigger Function that relate to the subscriber, and
during registration of a subscriber with the IP Multimedia Subsystem, sending the profile relating to the subscriber from the Home Subscriber Server to the Charging Trigger Function (C2, D2); receiving the subscriber profile at the Charging Trigger Function and configuring the Charging Trigger Function with said one or more string filters for identifying matching strings that are to be applied to messages passing through the Charging Trigger Function that relate to the subscriber;
determining if messages that relate to the subscriber passing through the Charging Trigger Function include one or more matching strings (C5, D5); and
if a message does include one or more matching strings, sending a reporting message to a charging control entity, the reporting message comprising data associated with each matching string (C6, D6).

14. An apparatus configured to operate as a Charging Trigger Function (1), the apparatus being **characterized by**:
a receiver (6) for receiving a subscriber profile from a Home Subscriber Server, the subscriber profile comprising one or more string filters to be applied to messages relating to the subscriber;
a memory (2) for storing the one or more string filters for identifying matching strings;
a matching unit (3) for determining if messages relating to the subscriber passing through the Charging Trigger Function include one or more matching strings;
a message generation unit (4) for generating a reporting message, the reporting message comprising data associated with each matching string; and
a transmitter (5) for sending the reporting message to a charging control entity.

15. A system comprising the apparatus configured to operate as a Charging Trigger Function of claim 14, and an apparatus configured to operate as a Home Subscriber Server (7), the Home Subscriber Server (7) being **characterized by**:
a memory (9) for storing subscriber profiles comprising one or more string filters to be applied to messages relating to the subscriber;
a receiver (8) for receiving a request for a subscriber's profile; and
a transmitter (11) for sending the subscriber profile including the one or more string filters to a Charging Trigger Function.

## Patentansprüche

1. Verfahren zum Betreiben einer Lade-Trigger-Funktion, um sitzungs- und/oder ereignisbezogene Informationen von einem IP-Multimedien-Subsystem zu sammeln, das Verfahren umfassend:
Konfigurieren der Lade-Trigger-Funktion mit einem oder mehr String-Filtern zum Identifizieren übereinstimmender Strings, die auf Nachrichten anzuwenden sind, die durch die Lade-Trigger-Funktion durchgehen, die sich auf den Teilnehmer beziehen;
Ermitteln, ob Nachrichten, die sich auf den Teilnehmer beziehen und durch die Lade-Trigger-Funktion durchgehen, einen oder mehrere übereinstimmende Strings (C5, D5) enthalten;
wobei das Verfahren **gekennzeichnet ist durch**
falls eine Nachricht nicht einen oder mehrere übereinstimmende Strings enthält, Senden einer Meldungsnachricht an eine Ladungssteuerinstanz, wobei die Meldungsnachricht Daten umfasst, die mit jedem übereinstimmenden String (C6, D6) verknüpft sind; und
wobei der Schritt zum Konfigurieren einer Lade-Trigger-Funktion mit einem oder mehreren String-Filtern ein Empfangen eines Teilnehmerprofils von einem Heim-Teilnehmer-Server, während einer Registrierung des Teilnehmers bei dem IP-Multimedien-Subsystem umfasst, wobei das Teilnehmerprofil den einen oder die mehreren String-Filter definiert, die auf Nachrichten anzuwenden sind, die durch die Lade-Trigger-Funktion durchgehen und sich auf den Teilnehmer (C2, D2) beziehen.

2. Verfahren nach Anspruch 1, wobei jeder des einen oder der mehreren String-Filter(s) einen primären regulären Ausdruck zum Identifizieren eines übereinstimmenden Strings umfasst.

3. Verfahren nach Anspruch 2, wobei einer oder mehrere der String-Filter ferner einen sekundären regulären Ausdruck zum Identifizieren eines spezifischen Werts oder eines spezifischen Bereichs von Werten umfasst, die als mit dem übereinstimmenden String verknüpfte Daten enthalten sind.

4. Verfahren nach Anspruch 3, wobei, falls ein String-Filter einen primären regulären Ausdruck und einen sekundären regulären Ausdruck umfasst, der Schritt zum Ermitteln, ob Nachrichten, die durch die Lade-Trigger-Funktion durchgehen, einen oder mehrere übereinstimmende Strings enthalten, umfasst:
Ermitteln, ob eine Nachricht, die durch die Lade-Trigger-Funktion durchgeht, einen oder mehrere Strings enthält, die mit dem primären regulären Ausdruck übereinstimmen; und
falls so, Ermitteln, ob jeder der übereinstimmenden Strings mit Daten verknüpft ist, die mit dem sekundären regulären Ausdruck übereinstimmen.

5. Verfahren nach einem der Ansprüche 2 bis 4, wobei jeder des einen oder der mehreren String-Filter(s) ferner eine Anzeige des Nachrichtentyps umfasst, auf den der primäre reguläre Ausdruck angewendet werden sollte.

6. Verfahren nach einem vorangehenden Anspruch, wobei die Meldungsnachricht ferner jeden übereinstimmenden String gemeinsam mit den mit diesem übereinstimmenden String verknüpften Daten umfasst.

7. Verfahren nach einem vorangehenden Anspruch, wobei die Meldungsnachricht ferner eine Anzeige des Nachrichtentyps umfasst, in dem der übereinstimmende String identifiziert wurde.

8. Verfahren nach einem vorangehenden Anspruch, wobei sich jeder des einen oder der mehreren String-Filter(s) auf eine der folgenden bezieht:
einer Sitzungseinleitungsprotokoll-Nachricht;
einer Durchmessernachricht; und
einer ISDN-Benutzerteil-Nachricht.

9. Verfahren nach Anspruch 8, wobei ein String-Filter, der sich auf eine Sitzungseinleitungsprotokoll-Nachricht bezieht, einen Leitvermerknamen umfasst.

10. Verfahren nach Anspruch 9, wobei, falls eine Sitzungseinleitungsprotokoll-Nachricht, die durch die Lade-Trigger-Funktion durchgeht, identifiziert ist, einen oder mehrere übereinstimmende Strings zu enthalten, dann die Daten, die mit jedem übereinstimmenden String verknüpft sind, einen Wert umfassen, der innerhalb des übereinstimmenden Leitvermerks enthalten ist.

11. Verfahren nach Anspruch 8, wobei ein String-Filter, der sich auf eine Durchmessernachricht bezieht, eines umfasst von:
einem Attribut-Wert-Paarungscode und einer Verkäufer-ID eines Attribut-Wert-Paares; oder
einen Attributnamen eines Attribut-Wert-Paares.

12. Verfahren nach Anspruch 11, wobei, falls eine Durchmessernachricht, die durch die Lade-Trigger-Funktion durchgeht, identifiziert ist, einen oder mehrere übereinstimmende Strings zu enthalten, dann die Daten, die mit dem übereinstimmenden String verknüpft sind, einen Wert umfassen, der innerhalb des übereinstimmenden Attribut-Wert-Paares enthalten ist.

13. Verfahren zum Betreiben eines Systems, das System umfassend einen Heim-Teilnehmer-Server innerhalb eines IP-Multimedien-Subsystems und eine Lade-Trigger-Funktion, das Verfahren umfassend:
Konfigurieren des Heim-Teilnehmer-Servers mit einem Teilnehmerprofil, wobei das Profil einen oder mehrere String-Filter (C1, D1) definiert, die auf Nachrichten anzuwenden sind, die durch die Lade-Trigger-Funktion durchgehen, die sich auf den Teilnehmer bezieht, und
während einer Registrierung eines Teilnehmers bei dem IP-Multimedien Subsystem, Senden des Profils, das sich auf den Teilnehmer bezieht, vom Heim-Teilnehmer-Server an die Lade-Trigger-Funktion (C2, D2); Empfangen des Teilnehmerprofils bei der Lade-Trigger-Funktion und Konfigurieren der Lade-Trigger-Funktion mit dem einen oder den mehreren String-Filter(n) zum Identifizieren der übereinstimmenden Strings, die auf Nachrichten anzuwenden sind, die durch die Lade-Trigger-Funktion durchgehen, die sich auf den Teilnehmer beziehen;
Ermitteln, ob Nachrichten, die sich auf den Teilnehmer beziehen, die durch die Lade-Trigger-Funktion durchgehen, einen oder mehrere übereinstimmende Strings (C5, D5) enthalten; und
falls eine Nachricht nicht einen oder mehrere übereinstimmende Strings enthält, Senden einer Meldungsnachricht an eine Ladungssteuerinstanz, wobei die Meldungsnachricht Daten umfasst, die mit jedem übereinstimmenden String (C6, D6) verknüpft sind.

14. Vorrichtung, die konfiguriert ist, als eine Lade-Trigger-Funktion (1) betrieben zu sein, wobei die Vorrichtung **gekennzeichnet ist durch**:
einen Empfänger (6) zum Empfangen eines Teilnehmerprofils von einem Heim-Teilnehmer-Server, das Teilnehmerprofil umfassend einen oder mehrere String-Filter, die auf Nachrichten, die sich auf den Teilnehmer beziehen, anzuwenden sind;
einen Speicher (2) zum Speichern des einen oder der mehreren String-Filter zum Identifizieren übereinstimmender Strings;
eine Übereinstimmungseinheit (3) zum Ermitteln, ob Nachrichten, die sich auf den Teilnehmer beziehen, die **durch** die Lade-Trigger-Funktion durchgehen, einen oder mehrere übereinstimmende Strings enthalten;
eine Nachrichtenerzeugungseinheit (4) zum Erzeugen einer Meldungsnachricht, wobei die Meldungsnachricht Daten umfasst, die mit jedem übereinstimmenden String verknüpft sind; und
einen Sender (5) zum Senden der Meldungsnachricht an eine Ladungssteuerinstanz.

15. System, umfassend die Vorrichtung, die konfiguriert ist, als eine Lade-Trigger-Funktion nach Anspruch 14 betrieben zu sein, und eine Vorrichtung, die konfiguriert ist, als ein Heim-Teilnehmer-Server (7) betrieben zu sein, wobei der Heim-Teilnehmer-Server (7) **gekennzeichnet ist durch**:
einen Speicher (9) zum Speichern von Teilnehmerprofilen, die einen oder mehrere String-Filter umfassen, die auf Nachrichten anzuwenden sind, die sich auf den Teilnehmer beziehen;
einen Empfänger (8) zum Empfangen einer Anfrage für ein Teilnehmerprofil; und
einen Sender (11) zum Senden des Teilnehmerprofils, das einen oder mehrere String-Filter enthält, an eine Lade-Trigger-Funktion.

## Revendications

1. Procédé de fonctionnement d'une fonction de déclenchement de facturation pour recueillir des informations se rapportant à une session et/ou à un événement en provenance d'un sous-système de multimédia IP, le procédé comprenant les étapes consistant à :
configurer la fonction de déclenchement de facturation avec un ou plusieurs filtres à chaînes pour identifier des chaînes d'adaptation qui doivent être appliquées à des messages passant par la fonction de déclenchement de facturation qui se rapportent à un abonné;
déterminer si des messages qui se rapportent à l'abonné passant par la fonction de déclenchement de facturation comprennent une ou plusieurs chaînes d'adaptation (C5, D5);
le procédé étant **caractérisé par** :
si un message ne comprend pas une ou plusieurs chaînes d'adaptation, l'envoi d'un message de rapport à une entité de commande de facturation, le message de rapport comprenant des données associées à chaque chaîne d'adaptation (C6, D6) ; et
dans lequel l'étape de configuration d'une fonction de déclenchement de facturation avec un ou plusieurs filtres à chaînes comprend, au cours de l'enregistrement de l'abonné avec le sous-système de multimédia IP, la réception d'un profil d'abonné d'un serveur d'abonnés local, le profil d'abonné définissant les un ou plusieurs filtres à chaînes qui doivent être appliqués à des messages passant par la fonction de déclenchement de facturation qui se rapportent à l'abonné (C2, D2).

2. Procédé selon la revendication 1, dans lequel chacun des un ou plusieurs filtres à chaînes comprend une expression principale normale pour identifier une chaîne d'adaptation.

3. Procédé selon la revendication 2, dans lequel un ou plusieurs desdits filtres à chaînes comprend en outre une expression secondaire normale pour identifier une valeur spécifique ou une plage spécifique de valeurs comprises comme données associées à la chaîne d'adaptation.

4. Procédé selon la revendication 3, dans lequel, si un filtre à chaîne comprend une expression principale normale et une expression secondaire normale, l'étape de détermination pour savoir si des messages passant par la fonction de déclenchement de facturation comprennent une ou plusieurs chaînes d'adaptation comprend les étapes consistant à :
déterminer si un message passant par la fonction de déclenchement de facturation comprend ou non une ou plusieurs chaînes s'adaptant à l'expression principale normale ; et,
le cas échéant, déterminer si chacune des chaînes d'adaptation est associée à des données s'adaptant à l'expression secondaire normale.

5. Procédé selon l'une quelconque des revendications 2 à 4, dans lequel chacun des un ou plusieurs filtres à chaînes comprend en outre une indication du type de message auquel l'expression principale normale doit être appliquée.

6. Procédé selon l'une quelconque des revendications précédentes, dans lequel le message de rapport comprend en outre chaque chaîne d'adaptation conjointement avec les données associées à cette chaîne d'adaptation.

7. Procédé selon l'une quelconque des revendications précédentes, dans lequel le message de rapport comprend en outre une indication du type de message dans lequel la chaîne d'adaptation a été identifiée.

8. Procédé selon l'une quelconque des revendications précédentes, dans lequel chacun des un ou plusieurs filtres à chaînes se rapporte à l'un des suivants :
un message de protocole d'initiation de session ;
un message de diamètre ; et
un message partiel d'utilisateur ISDN.

9. Procédé selon la revendication 8, dans lequel un filtre à chaîne se rapportant à un message de protocole d'initiation de session comprend un nom d'en-tête.

10. Procédé selon la revendication 9, dans lequel, si un message de protocole d'initiation de session passant par la fonction de déclenchement de facturation est identifié comme comprenant une ou plusieurs chaînes d'adaptation, les données associées à chaque chaîne d'adaptation comprennent une valeur incluse dans l'en-tête d'adaptation.

11. Procédé selon la revendication 8, dans lequel un filtre à chaîne se rapportant à un message de diamètre comprend l'un des suivants :
un code de paire de valeurs d'attribut et un ID de vendeur d'une paire de valeurs d'attribut ; ou
un nom d'attribut d'une paire de valeurs d'attribut.

12. Procédé selon la revendication 11, dans lequel, si un message de diamètre passant par la fonction de déclenchement de facturation est identifié comme incluant une ou plusieurs chaînes d'adaptation, les données associées à la chaîne d'adaptation comprennent une valeur incluse dans la paire de valeurs d'attribut d'adaptation.

13. Procédé de fonctionnement d'un système, le système comprenant un serveur d'abonnés local dans un sous-système de multimédia IP et une fonction de déclenchement de facturation, le procédé comprenant :
la configuration du serveur d'abonnés local avec un profil d'abonné, le profil définissant un ou plusieurs filtres à chaînes (C1, D1) qui doivent être appliqués à des messages passant par la fonction de déclenchement de facturation qui se rapportent à l'abonné et,
au cours de l'enregistrement d'un abonné avec le sous-système de multimédia IP, l'envoi du profil se rapportant à l'abonné depuis le serveur d'abonnés local à la fonction de déclenchement de facturation (C2, D2) ; la réception du profil d'abonné dans la fonction de déclenchement de facturation et la configuration de la fonction de déclenchement de facturation avec lesdits un ou plusieurs filtres à chaînes pour identifier des chaînes d'adaptation qui doivent être appliquées à des messages passant par la fonction de déclenchement de facturation qui se rapportent à l'abonné ;
la détermination du fait que des messages qui se rapportent à l'abonné passant par la fonction de déclenchement de facturation comprennent ou non une ou plusieurs chaînes d'adaptation (C5, D5) ; et,
si un message n'inclut pas une ou plusieurs chaînes d'adaptation, l'envoi d'un message de rapport à une entité de commande de facturation, le message de rapport comprenant des données associées à chaque chaîne d'adaptation (C6, D6).

14. Appareil configuré pour fonctionner comme fonction de déclenchement de facturation (1), l'appareil étant **caractérisé par** :
un récepteur (6) pour recevoir un profil d'abonné d'un serveur d'abonnés local, le profil d'abonné comprenant un ou plusieurs filtres à chaînes à appliquer à des messages se rapportant à l'abonné ;
une mémoire (2) pour stocker les un ou plusieurs filtres à chaînes pour identifier des chaînes d'adaptation ;
une unité d'adaptation (3) pour déterminer si des messages se rapportant à l'abonné passant par la fonction de déclenchement de facturation comprennent une ou plusieurs chaînes d'adaptation ;
une unité génératrice de messages (4) pour générer un message de rapport, le message de rapport comprenant des données associées à chaque chaîne d'adaptation ; et
un émetteur (5) pour envoyer le message de rapport à une entité de commande de facturation.

15. Système comprenant l'appareil configuré pour opérer comme fonction de déclenchement de facturation selon la revendication 14 et un appareil configuré pour opérer comme serveur d'abonnés local (7), le serveur d'abonnés local (7) étant **caractérisé par** :
une mémoire (9) pour stocker des profils d'abonnés comprenant un ou plusieurs filtres à chaînes à appliquer à des messages se rapportant à l'abonné ;
un récepteur (8) pour recevoir une demande pour un profil d'abonné ; et
un émetteur (11) pour envoyer le profil d'abonné incluant les un ou plusieurs filtres à chaînes à une fonction de déclenchement de facturation.
